# EUROPEAN PATENT APPLICATION

(11) **EP 4 733 204 A1**
(43) Date of publication of application: **29.04.2026**
(21) Application number: 24825682.8
(22) Date of filing: 29.05.2024
(51) Int. Cl.: B64U 70/83, B64U 10/13

(54) **SAFETY DEVICE, AND FLYING BODY PROVIDED WITH SAFETY DEVICE**

(30) Priority: 22.06.2023 JP 2023102879
(71) Applicant: Nippon Kayaku Kabushiki Kaisha, Tokyo 100-0005 (JP)
(72) Inventor: OKITA, Yosuke, Himeji-shi, Hyogo 679-2123 (JP)
(74) Representative: Gille Hrabal Partnerschaftsgesellschaft mbB Patentanwälte
(86) International application number: PCT/JP2024/019795
(87) International publication number: WO 2024/262275

(57) **Abstract**

Provided are a safety device capable of suppressing a driving force to one side generated by a power source and a reaction force applied from the power source to the other side when the driving force is generated, from being applied to a device for activating an actuator, and a flight vehicle provided with the safety device. A safety device 100 includes a container 10 including a lid 12, an ejection object 20 to be accommodated in the container 10, an actuator 30 including a piston member 31 that slides toward one side to push the lid 12 from inside to remove the lid 12, and a gas generator 38 that is located on the other side of the piston member 31 and generates a driving force that causes the piston member 31 to slide toward the one side, and a placement member 70 that is located in an intersecting direction intersecting a sliding direction of the piston member 31 with respect to the gas generator 38 and on which a trigger device 90 that activates the gas generator 38 can be placed.

## Description

### TECHNICAL FIELD

The present invention relates to a safety device and a flight vehicle provided with the safety device.

### BACKGROUND ART

In recent years, with the development of autonomous control technology and flight control technology, industrial use of a flight vehicle provided with a plurality of rotors called, for example, drones is accelerating. The drone flies, for example, by simultaneously rotating a plurality of rotors in a balanced manner, and ascent and descent may be performed by increasing or decreasing the number of revolutions of the rotors, and forward and backward movement may be performed by inclining an airframe via increasing or decreasing the number of revolutions of the rotors. Such a flight vehicle is not only used for disaster activities, cargo transport, landscape imaging, and the like, but it is also assumed that people will board, and is expected to be used and expanded worldwide in the future.

On the other hand, the risk of a falling accident of the flight vehicle as described above is considered dangerous, which hinders the spread of the flight vehicle. In order to reduce the risk of such a falling accident, a parachute device for a flight vehicle is being commercialized as a safety device.

For example, Patent Literature 1 discloses a device that executes a trigger operation that urges a plurality of projectiles to be propelled in different directions to expand a canopy.

### CITATIONS LIST

### PATENT LITERATURE

Patent Literature 1: US 2016/0251083 A

### SUMMARY OF INVENTION

### TECHNICAL PROBLEMS

Meanwhile, it is desired to suppress a driving force to one side generated by a power source in order to remove a lid of a container in which an ejection object is accommodated, and a reaction force applied from the power source to the other side when the driving force is generated, from being applied to a device for activating an actuator including the power source (such as a device that includes a control unit including a CPU, a ROM, a RAM, and the like for controlling the actuator or the like).

Therefore, an object of the present invention is to provide a safety device capable of suppressing a driving force to one side generated by a power source and a reaction force applied from the power source to the other side when the driving force is generated, from being applied to a device for activating an actuator, and a flight vehicle provided with the safety device.

### SOLUTIONS TO PROBLEMS

(1) A safety device according to the present invention includes: a container including a lid; an ejection object to be accommodated in the container; an actuator including a sliding member that slides toward one side to push the lid from inside to remove the lid, and a power source that is located on another side of the sliding member and generates a driving force that causes the sliding member to slide toward the one side; and a placement member that is located in an intersecting direction intersecting a sliding direction of the sliding member with respect to the power source and on which a device that activates the power source is allowed to be placed.
(2) In the safety device of above (1), it is preferable that at least a part of the actuator is located on the other side of the container, and the placement member is located in an orthogonal direction orthogonal to the sliding direction with respect to the at least a part of the actuator, and is located on the other side of the container.
(3) In the safety device of above (2), it is preferable that the at least a part of the actuator includes a part of the sliding member and the power source, and the placement member is placed in a lower portion of the container.
(4) The safety device of above (2) preferably further includes a mount member located on the other side of the actuator and the placement member, to which the actuator is fixed, and that couples the safety device to an airframe.
(5) In the safety device of above (1) to (4), it is preferable that the placement member forms a space capable of accommodating the device.
(6) A flight vehicle according to the present invention includes: an airframe; the safety device according to any one of above (1) to (4) coupled to the airframe; and the device placed on the placement member.

### ADVANTAGEOUS EFFECTS OF INVENTION

According to the present invention, it is possible to provide a safety device capable of suppressing a driving force to one side generated by a power source and a reaction force applied from the power source to the other side when the driving force is generated, from being applied to a device for activating an actuator, and a flight vehicle provided with the safety device.

### BRIEF DESCRIPTION OF DRAWINGS

FIG. 1 is a front view of a safety device according to a first embodiment of the present invention.
FIG. 2 is a plan view illustrating the safety device of FIG. 1.
FIG. 3 is a side view illustrating the safety device of FIG. 1.
FIG. 4 is an end face view taken along line A-A in FIG. 2.
FIG. 5 is a front view illustrating a flight vehicle to which the safety device of FIG. 1 is attached.
FIG. 6 is an end face view of a safety device according to a second embodiment of the present invention.
FIG. 7 is a plan view of a safety device according to a third embodiment of the present invention.
FIG. 8 is a plan view of a safety device according to a fourth embodiment of the present invention.
FIG. 9 is a plan view of a safety device according to a fifth embodiment of the present invention.
FIG. 10 is an end face view of a safety device according to a sixth embodiment of the present invention.

### DESCRIPTION OF EMBODIMENTS

### <First embodiment>

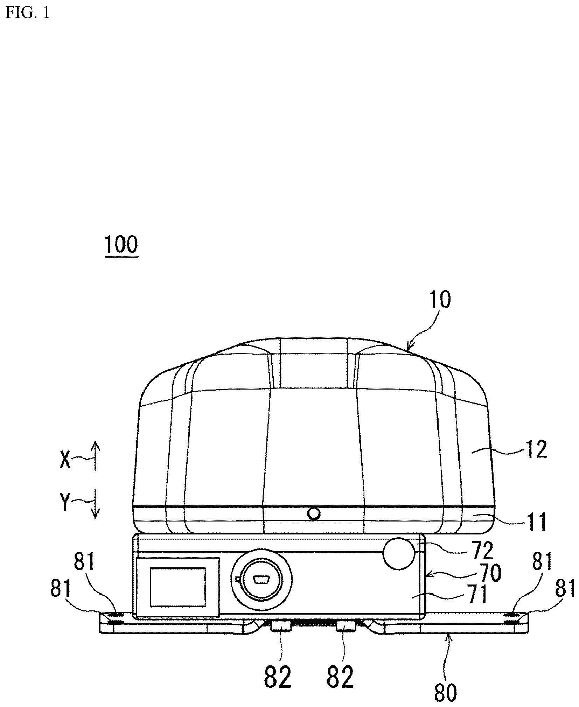

Hereinafter, a safety device and a flight vehicle according to a first embodiment of the present invention will be described with reference to FIGS. 1 to 5.

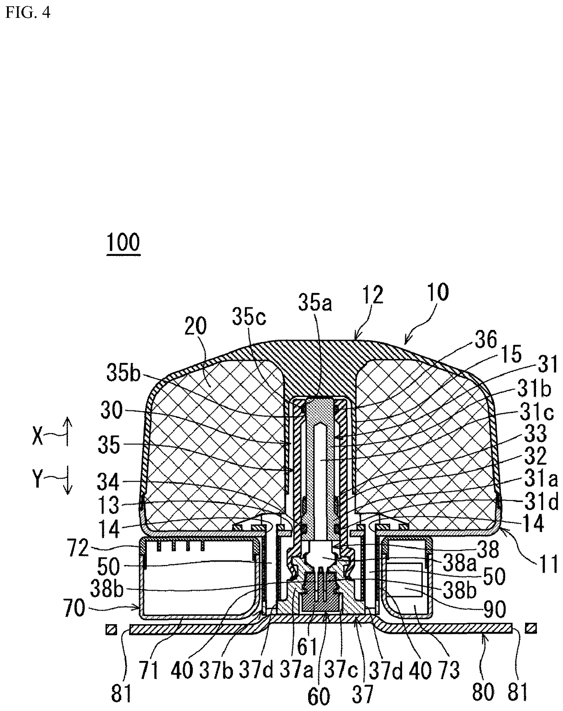

As illustrated in FIGS. 1 to 4, the safety device 100 includes a container 10, an ejection object 20, an actuator 30, a plurality of collars 40, a plurality of bolts 50, a harness 60, a placement member 70, and a mount member 80. In FIG. 4, there is a portion not illustrated in the end face.

The container 10 contains the ejection object 20. The container 10 includes a main body 11 and a lid 12.

The main body 11 has a bottomed shape opened to one side (a side indicated by an arrow X in FIG. 1 and the like). The one side is a side on which a piston member 31 slides by a driving force generated by a gas generator 38. The main body 11 includes a bore 13 and a plurality of bores 14. The bore 13 is formed in a central portion of the bottom portion of the main body 11, and penetrates a bottom portion of the main body 11 in the sliding direction of the piston member 31. Hereinafter, the sliding direction of the piston member 31 may be simply referred to as a sliding direction. The actuator 30 is inserted into the bore 13. The bore 14 is formed outside the central portion of the bottom portion of the main body 11, and penetrates the bottom portion of the main body 11 in the sliding direction. A bolt 50 for fixing the container 10 and the actuator 30 is inserted into the bore 14.

The lid 12 has a bottomed shape opened to the other side (side indicated by arrow Y in FIG. 1 and the like). The other side is a side opposite to a side on which the piston member 31 slides by the driving force generated by the gas generator 38. The opening of the lid 12 is formed to be fitted to the opening of the main body 11. The lid 12 is attached to the main body 11 by fitting the opening of the lid 12 with the opening of the main body 11. The lid 12 has a cylindrical portion 15. The cylindrical portion 15 is formed at a central portion of the ceiling portion of the lid 12 and protrudes from the ceiling portion of the lid 12 to the other side. The cylindrical portion 15 has a bottomed cylindrical shape that opens to the other side. The actuator 30 is placed inside the cylindrical portion 15.

The ejection object 20 is accommodated in the container 10. The ejection object 20 is placed between the cylindrical portion 15 and the side portion of the container 10. The ejection object 20 is ejected from the container 10 after the lid 12 is removed. For example, in a case where the lid 12 is removed from the main body 11 when the flight vehicle 1 (described later) to which the safety device 100 is coupled is dropped, the ejection object 20 is in a state of being exposed to the outside, and is ejected from the main body 11 by wind pressure or the like, or ejected so as to be pulled out from the main body 11 by a string-like connecting member (not illustrated) connected to the lid 12 or the like. Note that a support member (a member having a shape similar to that of a hat) extending from the piston member 31 and supporting the ejection object 20 may be provided, the lid 12 may be removed from the main body 11 by sliding the piston member 31 to one side and the support member may be moved to one side, and the ejection object 20 supported by the support member may be ejected from the main body 11 by moving the support member to one side. Note that, in the present embodiment, the ejection object 20 is a parachute or a paraglider.

The actuator 30 includes a piston member 31, a tubular member 32, a holding member 33, a seal member 34, a cylinder 35, a seal member 36, a base 37, and a gas generator 38.

A part of the actuator 30 is located outside the container 10 on the other side. Specifically, a part of the actuator 30 is located outside on the other side of an end portion on the other side of the container 10. More specifically, a part of the actuator 30 is located outside on the other side of the bottom portion of the main body 11. In the present embodiment, a part of the piston member 31, a part of the cylinder 35, the base 37, and the gas generator 38 are located outside the container 10 on the other side.

The other part of the actuator 30 is located inside the container 10 and accommodated in the container 10. In the present embodiment, the other part of the piston member 31, the tubular member 32, the holding member 33, the seal member 34, the other part of the cylinder 35, and the seal member 36 are located inside the container 10 and accommodated in the container 10.

The actuator 30 is placed offset to the other side with respect to the container 10. As a result, the thickness of the portion of the container 10 in contact with the piston member 31 at the time of activation can be easily adjusted in advance (for example, the thickness can be adjusted according to the output of the actuator), so that the strength of the container 10 can be easily adjusted. Furthermore, since the dimension in the sliding direction of the container 10 is easily reduced, the workability at the time of accommodating the ejection object 20 is improved.

The piston member 31 is an example of a sliding member that slides toward one side to push the lid 12 from inside to remove the lid 12. The lid 12 is located on one side of the piston member 31, and when the piston member 31 slides on one side, the piston member 31 comes into contact with the lid 12 to push the lid 12 to one side, and the lid 12 is pushed to one side, the lid 12 is removed from the main body 11. The piston member 31 is pushed up to one side by the driving force generated by the gas generator 38, and slides to one side with respect to the cylinder 35. The piston member 31 extends in the sliding direction. The piston member 31 includes a main body 31a, a rod-shaped portion 31b, a bore 31c, and a groove 31d.

The main body 31a is a portion having substantially the same outer diameter as an inner diameter of the cylinder 35. The rod-shaped portion 31b is connected to the main body 31a, extends to one side from an end portion on one side of the main body 31a, and is a portion having a smaller diameter than the main body 31a. The bore 31c is provided inside the main body 31a and the rod-shaped portion 31b. The bore 31c is formed along a central axis of the piston member 31 from the end portion on the other side of the main body 31a to the middle of the rod-shaped portion 31b. As a result, the weight of the piston member 31 is reduced as compared with the case where the bore 31c is not formed. The groove 31d is provided along a circumferential direction of the main body 31a on an outer peripheral surface of the main body 31a.

Furthermore, at the end portion on the other side of the rod-shaped portion 31b, the tubular member 32 is fitted or loosely fitted in a state where the tubular member is in contact with the main body 31a. Note that, although there may be a gap between an inner peripheral surface of the tubular member 32 and an outer peripheral surface of the rod-shaped portion 31b, the gap may be within a range that does not hinder plastic deformation due to approximately uniform compression when the holding member 33 and a stopper portion 35b of the cylinder 35 collide with each other. The tubular member 32 is made of a material that undergoes plastic deformation and a material (for example, a metal such as aluminum and brass, alloys such as stainless steel, resins such as monomer cast nylon, polyamide synthetic resins such as nylon 6, nylon 6,6, nylon 4,6, and the like) having a lower tensile strength than the piston member 31 (for example, a metal such as iron, aluminum, brass, and copper, alloys such as stainless steel, resin, and the like). The tubular member 32 and the inner peripheral surface of the cylinder 35 are separated from each other by a predetermined distance (for example, a distance at which the tubular member 32 plastically deformed by approximately uniform compression when the holding member 33 collides with the stopper portion 35b of the cylinder 35 does not come into contact with the inner peripheral surface of the cylinder 35) or more so that the tubular member 32 does not contact the inner peripheral surface of the cylinder 35. As a result, even if the holding member 33 collides with the stopper portion 35b of the cylinder 35 and is plastically deformed, the tubular member 32 deforms without being hindered by the inner peripheral surface of the cylinder 35, and sufficiently alleviates the impact of the piston member 31.

The holding member 33 holds the tubular member 32 in a state of being in contact with the main body 31a at the end portion on the other side of the rod-shaped portion 31b. Here, the holding member 33 may be an elastic member such as rubber, may be made of a material similar to the tubular member 32, and may have a ring shape or a clip shape.

The seal member 34 is provided in the groove 31d along the circumferential direction of the main body 31a. The seal member 34 is in contact with the groove 31d and the inner peripheral surface of the cylinder 35. The seal member 34 is an O-ring or the like.

The cylinder 35 accommodates the piston member 31 and slidably supports the piston member 31. The cylinder 35 extends in the sliding direction. The cylinder 35 has a bore 35a, a stopper portion 35b, and a groove 35c.

The bore 35a is a bore for the piston member 31 to protrude to one side with respect to the cylinder 35 at the time of activation. The bore 35a penetrates the end portion on one side of the cylinder 35 in the sliding direction. The piston member 31 is inserted into the bore 35a. The stopper portion 35b is formed inside an end portion on one side of the cylinder 35. The stopper portion 35b has a tubular shape placed so as to surround a part of the rod-shaped portion 31b of the piston member 31. The stopper portion 35b limits a sliding range of the piston member 31 toward one side. The piston member 31 that has slid to one side by the driving force generated by the gas generator 38 is restricted from sliding to one side by the holding member 33 colliding with the stopper portion 35b. The groove 35c is provided on the inner peripheral surface of the stopper portion 35b along the circumferential direction of the stopper portion 35b.

The seal member 36 is provided in the groove 35c along the circumferential direction of the stopper portion 35b. The seal member 36 is in contact with the groove 35c and the outer peripheral surface of the piston member 31. The seal member 36 is an O-ring or the like.

In the base 37, the end portion on the other side of the cylinder 35 is crimped and fixed. The base 37 is fixed to the mount member 80 by fastening bolts 82(see FIG. 1; a part not illustrated) to bores (not illustrated; internal female threading) provided in a flange portion 37b of the base 37 via the mount member 80. The base 37 is a squib holder. The base 37 includes an approximately cylindrical member 37a, the flange portion 37b, and an insertion port 37c.

The approximately cylindrical member 37a holds the gas generator 38 on the cylinder 35 side. The flange portion 37b is provided on the approximately cylindrical member 37a on the side opposite to the cylinder 35 side. The flange portion 37b includes a plurality of bores 37d. The bore 37d is used to attach the base 37 to the container 10. An inner peripheral surface of the bore 37d is internally threaded, and a bolt 50 inserted from the inside of the container 10 is screwed. The insertion port 37c is used to insert the connector 61 for energization into the electrode 38b of the gas generator 38.

The gas generator 38 is an example of a power source that is located on the other side of the piston member 31 and generates a driving force for sliding the piston member 31 toward one side. The gas generator 38 is placed on the other side of the piston member 31 while being inserted through the opening on the other side of the cylinder 35. As the gas generator 38, only an igniter may be used, or a gas generator including an igniter and a gas generating agent may be used. Furthermore, a hybrid type or a stored type gas generator that cleaves a sealing plate in a small gas cylinder by a gunpowder type igniter and discharges internal gas to the outside may be used. In this case, as a pressurized gas in the gas cylinder, a non-flammable gas such as argon, helium, nitrogen, or carbon dioxide, or a mixture of these can be used. Furthermore, in order to reliably propel the piston when the pressurized gas is released, the gas generator may be provided with a heating element including a gas generating agent composition, a thermite composition, or the like. The gas generator 38 is a micro gas generator or the like. The gas generator 38 includes a cup body 38a and a plurality of electrodes 38b.

An igniter is placed inside the cup body 38a. Furthermore, for example, a gas generating agent, a gas cylinder, and/or a heating element are appropriately placed inside the cup body 38a. The electrode 38b is electrically connected to an igniter placed inside the cup body 38a.

The collar 40 is a member for placing the actuator 30 offset to the other side with respect to the container 10. The collar 40 is placed between the bottom portion of the main body 11 of the container 10 and the flange portion 37b of the base 37. The collar 40 has a cylindrical shape extending in the sliding direction, and the internal space of the collar 40 communicates with the bore 14 and the bore 37d.

The bolt 50 is a member for fixing the container 10 and the actuator 30. The bolt 50 is inserted through the bore 14 and the collar 40 from the inner side of the container 10 and screwed into the bore 37d. By tightening the bolt 50, the container 10 and the actuator 30 are fixed.

The harness 60 is a member for electrically connecting the gas generator 38 and the trigger device 90. The harness 60 includes a connector 61, a wiring 62, and a connector 63.

The connector 61 is located on the other side of the gas generator 38 and is connected to the electrode 38b. The wiring 62 is connected to the connector 61 and the connector 63. The connector 63 is connected to the trigger device 90. As a result, a signal from the trigger device 90 is supplied to the gas generator 38, and the gas generator 38 is activated.

Here, in order to avoid complication of the drawing, the wiring 62 and the connector 63 are illustrated outside the placement member 70, but the wiring 62 and the connector 63 are placed inside the placement member 70. Note that, in a case where the trigger device 90 is placed outside the placement member 70, the wiring 62 and the connector 63 may be placed outside the placement member 70.

The placement member 70 is a member on which a device for activating the gas generator 38 can be placed. In the present embodiment, the placement member 70 is a member for placing the trigger device 90 for activating the gas generator 38. Note that not only the trigger device 90 but also a battery that stores electric power to be supplied to the trigger device 90 may be placed on the placement member 70, or an accessory member such as a wiring that connects the trigger device 90 and the battery may be placed. Furthermore, a buzzer device (sound source) or/and an LED (light source) indicating the state of the trigger device 90 may be placed on the placement member 70. Furthermore, a member (for example, a damper or the like) capable of reducing vibration generated by a reaction force or the like may be placed on the placement member 70. The placement member 70 includes a main body 71 and a lid 72.

The main body 71 has a bottomed shape opened to one side. As described above, a part of the actuator 30 is located on the other side of the container 10, and the main body 71 is annularly placed so as to surround the part.

The lid 72 has a bottomed shape opened to the other side. As described above, a part of the actuator 30 is located on the other side of the container 10, and the lid 72 is annularly placed so as to surround the part. The opening of the lid 72 is formed to be fitted to the opening of the main body 71. The lid 72 is attached to the main body 71 by fitting the opening of the lid 72 to the opening of the main body 71.

The placement member 70 is shifted in the intersecting direction intersecting the sliding direction with respect to the gas generator 38, and is not located on the sliding direction which is the direction of one side and the other side of the gas generator 38. In the present embodiment, the placement member 70 is located in an orthogonal direction orthogonal to the sliding direction with respect to the gas generator 38. To explain more specifically, in the present embodiment, the placement member 70 is annularly disposed in the lower portion of the container 10 so as to surround the gas generator 38. Furthermore, the main body 71 is located in an orthogonal direction orthogonal to the sliding direction with respect to the cup body 38a and the electrode 38b. To explain more specifically, in the present embodiment, the main body 71 is annularly disposed so as to surround the cup body 38a and the electrode 38b. The lid 72 is located in an orthogonal direction orthogonal to the sliding direction with respect to the cup body 38a. To explain more specifically, in the present embodiment, the lid 72 is annularly disposed so as to surround the cup body 38a and the electrode 38b. Note that the placement member 70 (main body 71, lid 72) does not necessarily have an annular structure, and may have a non-annular shape such as a shape like a letter C of the alphabet, a semicircular shape, or a fan shape in plan view. Furthermore, hereinafter, the intersecting direction intersecting the sliding direction may be simply referred to as an intersecting direction. Furthermore, an orthogonal direction orthogonal to the sliding direction may be simply referred to as an orthogonal direction.

As described above, a part of the actuator 30 is located outside the container 10 on the other side, and the placement member 70 is located in the direction orthogonal to the part. Specifically, the main body 71 is located in the orthogonal direction with respect to the cylinder 35, the approximately cylindrical member 37a, the flange portion 37b, the insertion port 37c, the cup body 38a, and the electrode 38b of the part. Furthermore, the lid 72 is located in a direction orthogonal to the main body 31a, the cylinder 35, the approximately cylindrical member 37a, and the cup body 38a of the part.

The placement member 70 is located on the other side of the container 10 and is located between the container 10 and the mount member 80. Specifically, the main body 71 and the lid 72 are located on the other side of the container 10, and are located between the container 10 and the mount member 80.

The placement member 70 forms a space 73 for accommodating the trigger device 90. The space 73 is a space surrounded by the main body 71 and the lid 72. The trigger device 90 is placed in the space 73 and is accommodated in the placement member 70. As described above, in the present embodiment, the placement member 70 is a case for accommodating the trigger device 90.

The placement member 70 is fixed to the container 10. For example, the placement member 70 is fixed to the container 10 with a bolt (not illustrated), an adhesive, or the like. Note that the placement member 70 may be fixed to the mount member 80 or the like.

Since the members constituting the placement member 70 and the members constituting the container 10 are separated from each other, manufacturability and assemblability are improved, and it is also possible to cope with a complicated shape corresponding to an attachment partner (for example, the surface shape of the flight vehicle), and thus versatility and designability are improved.

The trigger device 90 includes, for example, a control unit (not illustrated) including a CPU, a ROM, a RAM, and the like, and an abnormal state determination unit (not illustrated) that determines whether or not the flight vehicle 1 is in an abnormal state on the basis of a signal received from a detection unit (not illustrated) that detects a state (failure, out of control, flight status (flight attitude, speed, angular velocity, altitude, attitude angle, and the like), distance to an obstacle, position information, and the like) of the flight vehicle 1. By executing various programs (signal transmission program, signal reception program, and the like) using the CPU, the trigger device can automatically transmit a command signal, an activation signal, and the like to each part according to a situation (for example, in a case where the flight vehicle 1 is in an abnormal state (at the time of abnormality)), and can receive a command signal and the like from the outside via a communication unit (not illustrated) and transmit the command signal, an activation signal, and the like to each part. For example, the trigger device has a function of executing various programs using the CPU to transmit to the actuator 30 an automatic startup signal for automatically starting the actuator 30 in a case where the flight vehicle 1 is in an abnormal state, and of executing various programs using the CPU to transmit to the actuator 30 a startup signal for starting the actuator 30 in a case where a trigger signal is received from a remote signal transceiver operated by an operator.

Here, examples of the detection unit include a signal reception sensor, an acceleration sensor, a gyro sensor, an atmospheric pressure sensor, a global positioning system (GPS), a laser sensor, an ultrasonic sensor, an infrared sensor, a millimeter wave radar, a submillimeter wave radar, a speed sensor, a single or compound eye vision sensor, an energy amount sensor, a wind direction detection sensor, and the like, and include at least one or more of these. Examples of the other detection units may include one that detects that an emergency signal is transmitted from an emergency signal transmission device in response to an operation of an operator, one that detects a failure of equipment provided in the flight vehicle 1, and the like.

Furthermore, the above-described "at the time of abnormality" refers to a case where the abnormal state determination unit determines that the flight vehicle 1 is in an abnormal state (failure, out of control, abnormal fall, and the like) on the basis of a signal from the above-described detection unit provided in the flight vehicle 1 or the safety device 100. Specifically, it is a case where the abnormal state determination unit determines that any one or more of the following states has occurred: "loss of a signal from the control unit of the flight vehicle 1 for a certain period of time or more or reception of an abnormality signal from the control unit of the flight vehicle 1"; "loss of a signal from a remote signal transceiver for a certain period of time or more or reception of an abnormal signal from the remote signal transceiver"; "loss of a signal from a ground station for a certain period time or more or reception of an abnormal signal from the ground station in a case where communication with the ground station (including a relay station) is present"; "from position information of the flight vehicle 1, the flight vehicle 1 approaches or enters a prohibited area, or deviates from a planned route"; "the remaining amount of power supply (battery) or fuel of the flight vehicle 1 is less than or equal to a prescribed value"; "the acceleration of the flight vehicle 1 is less than or equal to a prescribed value or greater than or equal to a prescribed value"; "the angular velocity of the flight vehicle 1 is greater than or equal to a prescribed value"; "the attitude angle of the flight vehicle 1 is greater than or equal to a prescribed value (for example, in a state of being inclined by 45° or more with respect to the horizontal)"; "approach to an obstacle affecting a damage to the flight vehicle 1 (detection by a laser sensor (LiDAR or the like) or an infrared sensor, or detection by a vision sensor and image analysis)"; "in a case where the flight vehicle 1 is capable of being boarded by a human, an emergency state has occurred in a human inside the flight vehicle 1 (detected by an emergency signal being transmitted from an emergency signal transmission device)"; "a fatal failure of equipment provided in the flight vehicle 1"; and the like.

The mount member 80 is a member for coupling the safety device 100 to the airframe 2. The mount member 80 is a plate-shaped mount plate. The mount member 80 is located on the other side of the actuator 30 and the placement member 70, and the actuator 30 is fixed to the mount member 80. That is, the mount member 80 is located on the other side of the actuator 30 and the other side of the placement member 70. For example, the actuator 30 is fixed to the mount member 80 with a bolt (not illustrated) or the like. The mount member 80 has a plurality of bores 81. The mount member 80 is fixed to the airframe 2 by screwing, into the airframe 2, a bolt (not illustrated) inserted into the bore 81. By fixing the mount member 80 to the airframe 2, the safety device 100 is coupled to the airframe 2.

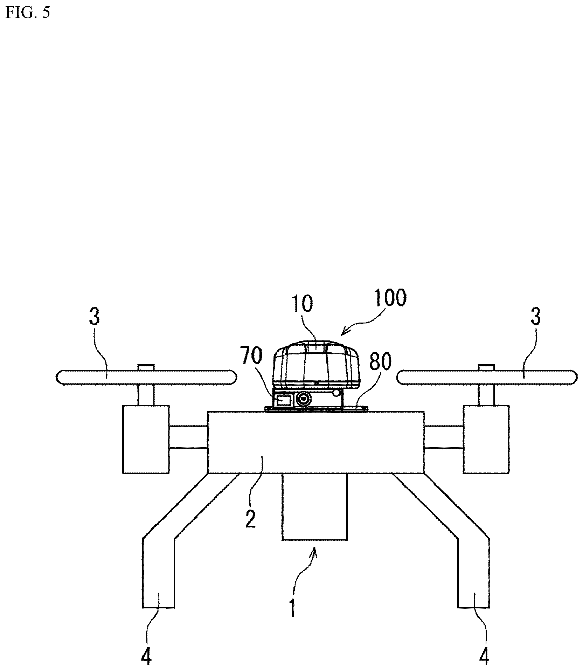

As illustrated in FIG. 5, the flight vehicle 1 includes an airframe 2, a plurality of propulsion mechanisms 3, a plurality of legs 4, a safety device 100, and a trigger device 90 (see FIG. 4).

The propulsion mechanism 3 is coupled to the airframe 2 to propel the airframe 2. For example, the propulsion mechanism 3 is a propeller or the like. The leg 4 is provided in a lower portion of the airframe 2. The safety device 100 is coupled to the airframe 2. As described above, the bolt (not illustrated) inserted into the bore 81 is screwed and tightened with the airframe 2, whereby the safety device 100 is coupled to the airframe 2. The trigger device 90 is placed on the placement member 70.

As described above, the safety device 100 according to the first embodiment of the present invention includes the container 10 including the lid 12, the ejection object 20 to be accommodated in the container 10, the actuator 30 including the piston member 31 that slides toward one side to push the lid 12 from inside to remove the lid 12, and the gas generator 38 that is located on the other side of the piston member 31 and generates a driving force that causes the piston member 31 to slide toward the one side, and the placement member 70 that is shifted and located in the intersecting direction intersecting the sliding direction of the piston member 31 with respect to the gas generator 38 and on which the trigger device 90 that activates the gas generator 38 can be placed.

With such a configuration, the placement member 70 is located so as to be shifted in the intersecting direction with respect to the gas generator 38 (disposed at the eccentric position) and hence, in a case where the activated gas generator 38 generates a driving force toward one side, a direct impact caused by the driving force is not received. That is, the driving force can be suppressed from being applied to the placement member 70, and the driving force can be suppressed from being applied to the trigger device 90. Furthermore, in a case where the gas generator 38 generates a driving force to one side, it is possible to suppress a reaction force applied from the gas generator 38 to the other side from being applied to the placement member 70, and it is possible to suppress the reaction force from being applied to the trigger device 90.

Furthermore, in the safety device 100 according to the first embodiment of the present invention, at least a part of the actuator 30 is located on the other side of the container 10, and the placement member 70 is located in an orthogonal direction orthogonal to the sliding direction with respect to the at least a part of the actuator 30 and is located on the other side of the container 10.

According to this, at least a part of the actuator 30 is located on the other side of the container 10, and the placement member 70 is placed in the space located in the direction orthogonal to the at least a part and located on the other side of the container 10. Therefore, it is possible to suppress the driving force and the reaction force from being applied to the trigger device 90 while suppressing the increase in size of the safety device 100.

Furthermore, in the safety device 100 according to the first embodiment of the present invention, the at least part of the actuator 30 includes a part of the piston member 31 and the gas generator 38, and the placement member 70 is annularly placed so as to surround the at least part of the actuator 30.

Accordingly, the trigger device 90 can be easily placed around the part of the piston member 31 and the gas generator 38.

Furthermore, the safety device 100 according to the first embodiment of the present invention further includes a mount member 80 which is located on the other side of the actuator 30 and the placement member 70, to which the actuator 30 is fixed, and for coupling the safety device 100 to the airframe 2.

According to this, since the mount member 80 is located on the other side of the placement member 70, the trigger device 90 can be easily placed on the placement member 70 even in a state where the safety device 100 is coupled to the airframe 2.

Furthermore, in the safety device 100 according to the first embodiment of the present invention, the placement member 70 forms a space 73 capable of accommodating the trigger device 90.

According to this, since the trigger device 90 can be accommodated in the placement member 70, it is possible to suppress the trigger device 90 from falling off from the placement member 70.

Furthermore, the flight vehicle 1 according to the first embodiment of the present invention includes the airframe 2, the safety device 100 coupled to the airframe 2, and the trigger device 90 placed on the placement member 70.

According to this, the effects similar to those of the safety device 100 are obtained.

### <Second embodiment>

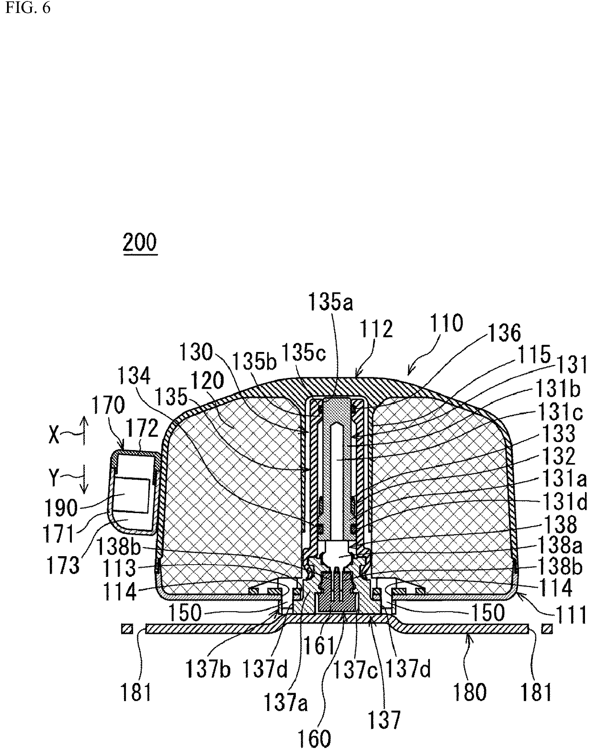

Hereinafter, a safety device according to a second embodiment of the present invention will be described with reference to FIG. 6. In the present embodiment, reference signs having the same numbers in the last two digits as those in the first embodiment are similar, and thus the description thereof may be omitted. Furthermore, portions that are not particularly described are similar to those of the safety device and the flight vehicle of the first embodiment, and thus description thereof may be omitted.

As illustrated in FIG. 6, a safety device 200 according to the present embodiment is mainly different from the safety device 100 according to the first embodiment in that a container 110 is provided instead of the container 10 of the first embodiment, the collar 40 of the first embodiment is not provided, a bolt 150 is provided instead of the bolt 50 of the first embodiment, and a placement member 170 is provided instead of the placement member 70 of the first embodiment. In FIG. 6, there is a portion not illustrated in the end face.

The container 110 contains an ejection object 120. The container 110 includes a main body 111 and a lid 112.

The main body 111 has a bottomed shape opened to one side. The main body 111 includes a bore 113 and a plurality of bores 114. The bore 113 is formed at a central portion of a bottom portion of the main body 111, and penetrates the bottom portion of the main body 111 in the sliding direction. An actuator 130 is inserted into the bore 113. The bore 114 is formed outside the central portion of the bottom portion of the main body 111, and penetrates the bottom portion of the main body 111 in the sliding direction. The bolt 150 for fixing the container 110 and the actuator 130 is inserted into the bore 114.

The lid 112 has a bottomed shape opened to the other side. An opening of the lid 112 is formed to be fitted to an opening of the main body 111. The lid 112 is attached to the main body 111 by fitting the opening of the lid 112 to the opening of the main body 111. The lid 112 includes a cylindrical portion 115. The cylindrical portion 115 is formed at a central portion of a ceiling portion of the lid 112 and protrudes from the ceiling portion of the lid 112 to the other side. The cylindrical portion 115 has a bottomed cylindrical shape that opens to the other side. The actuator 130 is placed inside the cylindrical portion 115.

The bolt 150 is a member for fixing the container 110 and the actuator 130. The bolt 150 is inserted into the bore 114 from the inside of the container 110 and screwed into a bore 137d. By tightening the bolt 150, the container 110 and the actuator 130 are fixed.

In the present embodiment, the container 110 and the actuator 130 are fixed without the collar 40 of the first embodiment. As a result, in the actuator 130, a part of an approximately cylindrical member 137a, a flange portion 137b, and a part of an insertion port 137c are located on the other side of the container 110, and the other portions are located inside the container 110 and accommodated in the container 110.

The placement member 170 is a member on which a device for activating a gas generator 138 can be placed. In the present embodiment, the placement member 170 is a member for placing a trigger device 190. Note that not only the trigger device 190 but also a battery that stores electric power to be supplied to the trigger device 190 may be placed on the placement member 170, or an accessory member such as a wiring that connects the trigger device 190 and the battery may be placed. The placement member 170 includes a main body 171 and a lid 172.

The main body 171 has a bottomed shape opened to one side. The lid 172 has a bottomed shape opened to the other side. An opening of the lid 172 is formed to be fitted to an opening of the main body 171. The lid 172 is attached to the main body 171 by fitting the opening of the lid 172 to the opening of the main body 171.

The placement member 170 is located in an intersecting direction intersecting a sliding direction with respect to the gas generator 138, and is not located on one side and the other side of the gas generator 138. In the present embodiment, the intersecting direction is not orthogonal to the sliding direction.

As described above, a part of the actuator 130 is located on the other side of the container 110, but the placement member 170 is not located in a direction orthogonal to the part. Furthermore, the placement member 170 is located on the lateral side of the container 110 and is not located on the other side of the container 110.

The placement member 170 forms a space 173 for accommodating the trigger device 190. The space 173 is a space surrounded by the main body 171 and the lid 172. The trigger device 190 is placed in the space 173 and is accommodated in the placement member 170. As described above, in the present embodiment, the placement member 170 is a case for accommodating the trigger device 190.

The placement member 170 is fixed to the container 110. The placement member 170 is fixed to a side portion of the container 110. For example, the placement member 170 is fixed to the container 110 with a bolt (not illustrated) or the like.

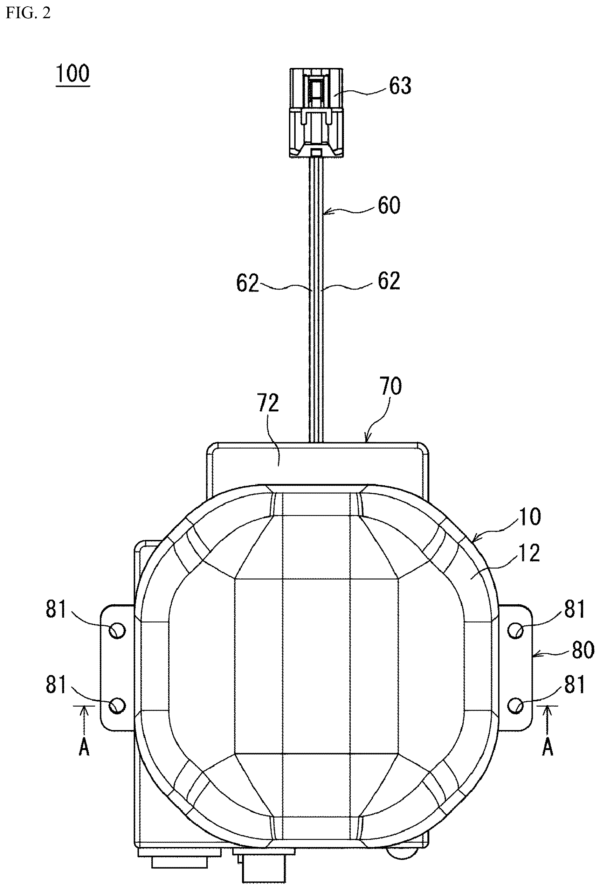

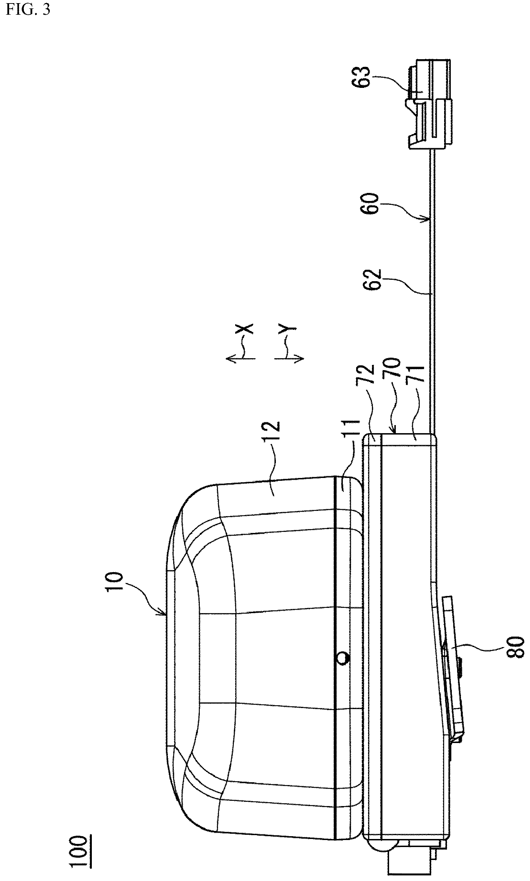

In the present embodiment, in order to allow the lid 112 to be detached and to prevent the wiring 63 (see FIGS. 2 and 3) from being torn in a case where the lid 112 is detached, for example, sensor information and the like of the trigger device 190 are transmitted by wireless communication, instead of a mode in which the connector 63 (see FIGS. 2 and 3) of the first embodiment is connected to the trigger device 190 by wire. The similarity applies to the third to fifth embodiments described later.

According to the safety device 200 according to the present embodiment, the effects similar to those of the first embodiment can be obtained. In particular, as compared with the case of the first embodiment, since the placement member 170 is provided apart from the gas generator 138 in the intersecting direction, a direct impact due to a driving force in a case where the activated gas generator 138 generates the driving force to one side is less likely to be received as compared with the case of the first embodiment.

### <Third embodiment>

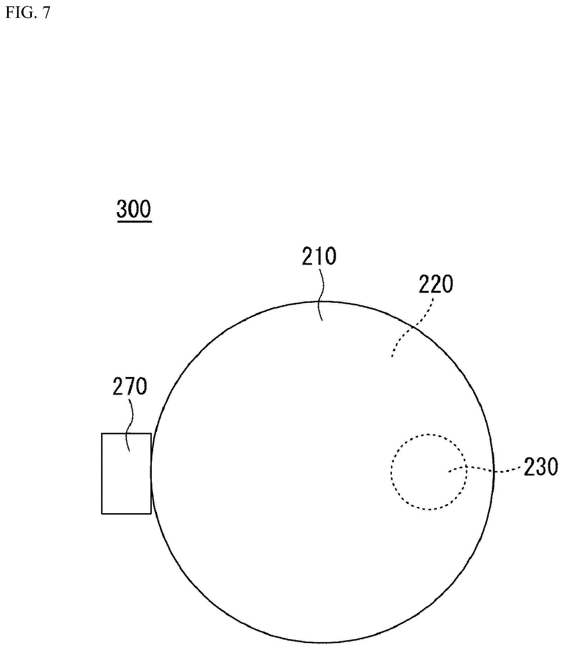

Hereinafter, a safety device according to a third embodiment of the present invention will be described with reference to FIG. 7. In the present embodiment, reference signs having the same numbers in the last two digits as those in the first embodiment are similar, and thus the description thereof may be omitted. Furthermore, portions that are not particularly described are similar to those of the safety device and the flight vehicle of the first embodiment, and thus description thereof may be omitted.

As illustrated in FIG. 7, a safety device 300 according to the present embodiment includes a container 210, an ejection object 220, an actuator 230, and a placement member 270.

The actuator 230 is placed outside a central portion of the container 210 in plan view. The placement member 270 is placed on a side portion of the container 210. The placement member 270 is placed at a position farthest from the actuator 230 in the side portion of the container 210. As described above, in a case where the actuator 230 is placed outside the central portion of the container 210 in plan view, by placing the placement member 270 at the position farthest from the actuator 230 in the side portion of the container 210, it is possible to further suppress a driving force to one side generated by a gas generator and a reaction force applied from the gas generator to the other side when the driving force is generated, from being applied to a trigger device. Note that the placement member 270 may not be placed at the position farthest from the actuator 230 in the side portion of the container 210, and may be placed in an intersecting direction with respect to the gas generator.

According to the safety device 300 according to the present embodiment, the effects similar to those of the second embodiment can be obtained.

### <Fourth embodiment>

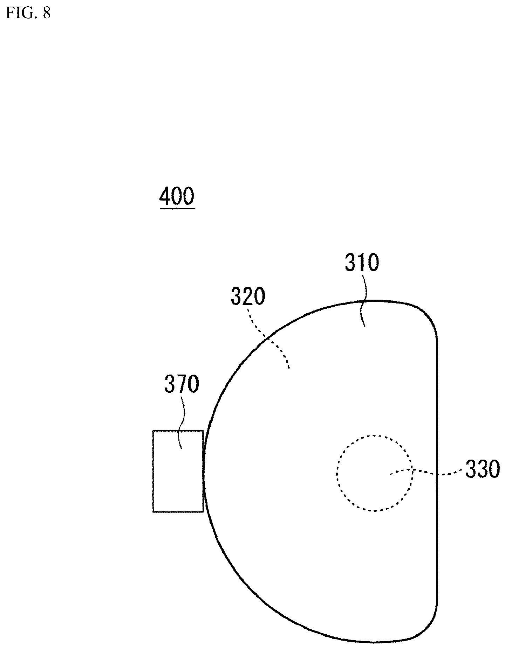

Hereinafter, a safety device according to a fourth embodiment of the present invention will be described with reference to FIG. 8. In the present embodiment, reference signs having the same numbers in the last two digits as those in the first embodiment are similar, and thus the description thereof may be omitted. Furthermore, portions that are not particularly described are similar to those of the safety device and the flight vehicle of the first embodiment, and thus description thereof may be omitted.

As illustrated in FIG. 8, a safety device 400 according to the present embodiment includes a container 310, an ejection object 320, an actuator 330, and a placement member 370.

The container 310 has a substantially semicircular shape in plan view. The placement member 370 is placed on a side portion of the container 310. The placement member 370 is placed at a position farthest from the actuator 330 in the side portion of the container 310. As described above, in a case where the container 310 has a substantially semicircular shape in plan view, by placing the placement member 370 at the position farthest from the actuator 330 in the side portion of the container 310, it is possible to further suppress a driving force to one side generated by a gas generator and a reaction force applied from the gas generator to the other side when the driving force is generated, from being applied to a trigger device. Note that the placement member 370 may not be placed at the position farthest from the actuator 330 in the side portion of the container 310, and may be placed in an intersecting direction with respect to the gas generator.

According to the safety device 400 according to the present embodiment, the effects similar to those of the second embodiment can be obtained.

### <Fifth embodiment>

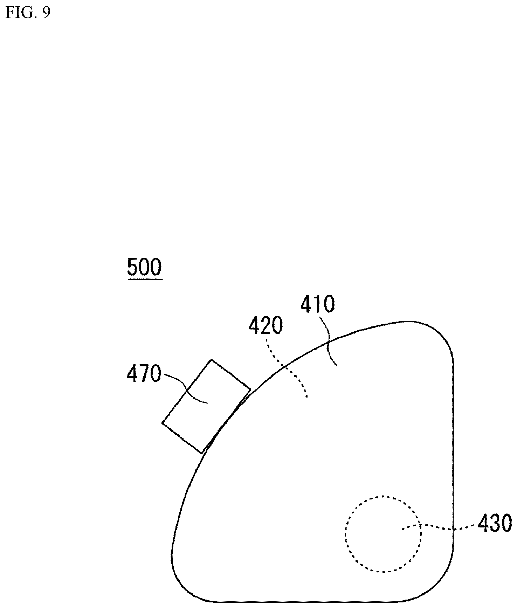

Hereinafter, a safety device according to a fifth embodiment of the present invention will be described with reference to FIG. 9. In the present embodiment, reference signs having the same numbers in the last two digits as those in the first embodiment are similar, and thus the description thereof may be omitted. Furthermore, portions that are not particularly described are similar to those of the safety device and the flight vehicle of the first embodiment, and thus description thereof may be omitted.

As illustrated in FIG. 9, a safety device 500 according to the present embodiment includes a container 410, an ejection object 420, an actuator 430, and a placement member 470.

The container 410 has a substantially fan shape in plan view. The placement member 470 is placed on a side portion of the container 410. The placement member 470 is placed at a position farthest from the actuator 430 in the side portion of the container 410. As described above, in a case where the container 410 has a substantially fan shape in plan view, by placing the placement member 470 at the position farthest from the actuator 430 in the side portion of the container 410, it is possible to further suppress a driving force to one side generated by a gas generator and a reaction force applied from the gas generator to the other side when the driving force is generated, from being applied to a trigger device. Note that the placement member 470 may not be placed at the position farthest from the actuator 430 in the side portion of the container 410, and may be placed in an intersecting direction with respect to the gas generator.

According to the safety device 500 according to the present embodiment, the effects similar to those of the second embodiment can be obtained.

### <Sixth embodiment>

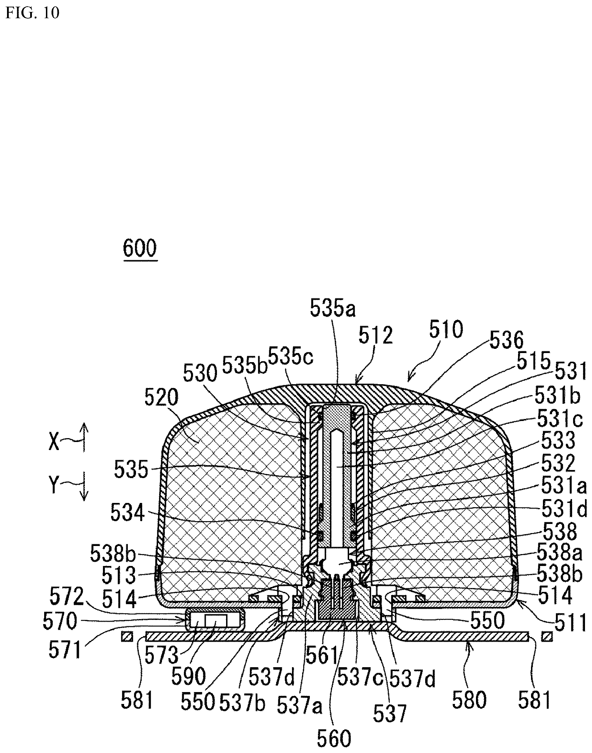

Hereinafter, a safety device according to a sixth embodiment of the present invention will be described with reference to FIG. 10. In the present embodiment, reference signs having the same numbers in the last two digits as those in the second embodiment are similar, and thus the description thereof may be omitted. Furthermore, portions that are not particularly described are similar to those of the safety device and the flight vehicle of the second embodiment, and thus description thereof may be omitted.

As illustrated in FIG. 10, a safety device 600 according to the present embodiment is mainly different from the safety device 200 according to the second embodiment in that a placement member 570 is provided instead of the placement member 170 of the second embodiment, and a trigger device 590 is provided instead of the trigger device 190 of the second embodiment. In FIG. 10, there is a portion not illustrated in the end face.

The placement member 570 is located between a container 510 and a mount member 580 and is attached to the mount member 580. The placement member 570 includes a main body 571 opened to one side and a lid 572 opened to the other side, and forms a space 573 capable of accommodating the trigger device 590.

The trigger device 590 is more compact than the trigger device 190 of the second embodiment so as to be placed in the space 573.

In the present embodiment, unlike the second embodiment, since the connector 63 (see FIGS. 2 and 3) can be connected to the trigger device 590, the sensor information and the like of the trigger device 590 are transmitted by wired communication.

According to the safety device 600 according to the present embodiment, it is possible to suppress a driving force to one side and a reaction force applied to the other side from being applied to the trigger device 590, and to make the safety device 600 more compact.

### <Other embodiments>

Although the embodiments of the present invention have been described above with reference to the drawings, it should be understood that the specific configuration is not limited to the embodiments. The scope of the present invention is defined not by the description of the above embodiments but by the claims, and includes meanings equivalent to the claims and all modifications within the scope.

Moreover, in the above embodiments, the parachute or the paraglider is exemplified as the ejection object, but the ejection object is not limited thereto, and one including a lift generation member, a mesh member for capture or binding, a fire extinguishing agent, life-saving equipment, medicines, and the like may be ejected as the ejection object. Here, examples of the lift generation member include a parafoil, a Rogallo parachute, a single surface parachute, an airplane wing, a propeller, and a balloon. Furthermore, in a case where the lift generation member includes a control line, it is desirable that the safety device includes a steering mechanism capable of changing an inclination angle of the ejected lift generation member using the control line. This steering mechanism includes, for example, a plurality of reels for winding up a plurality of the control lines coupled to the lift generation member, respectively, and a motor serving as power of these reels. By winding up or pulling out the control lines by driving the motor, it is possible to appropriately pull the lift generation member or loosen the pulling.

Furthermore, in the above embodiments, the gas generator is adopted as the power source, but the configuration is not limited as long as it is possible to impart a driving force to the sliding member for propelling the sliding member along the cylinder, and for example, an elastic body such as a spring may be adopted.

Furthermore, in the above embodiments, the case where at least a part of the actuator is located on the other side of the container has been described, but the present invention is not limited thereto. For example, the actuator may be entirely accommodated in the container, and the actuator may not be located on the other side of the container.

Furthermore, in the above embodiments, the case where the placement member forms the space for accommodating the trigger device has been described, but the present invention is not limited thereto. For example, the placement member may not form the space for accommodating the trigger device, may form a mounting surface for mounting the trigger device, or may form a recess for fitting the trigger device.

Furthermore, in the above embodiments, the safety device using the container that includes the bottomed main body and the lid including the cylindrical portion has been described, but the present invention is not limited thereto. For example, instead of the container of the above embodiments, a container that includes a bottomed cylindrical portion including an opening at one end portion and a lid that closes the opening may be used for the safety device. At this time, the placement member can be provided on a side portion (cylindrical portion) of the bottomed cylindrical portion.

### REFERENCE SIGNS LIST

1 flight vehicle
2 airframe
3 propulsion mechanism
4 leg
10, 110, 210, 310, 410, 510 container
11, 31a, 71, 111, 131a, 171, 511, 531a, 571 main body
12, 72, 112, 172, 512, 572lid
13, 14, 31c, 35a, 37d, 81, 113, 114, 131c, 135a, 137d, 181, 513, 514, 531c, 535a, 537d, 581 bore
15, 115, 515 cylindrical portion
20, 120, 220, 320, 420, 520 ejection object
30, 130, 230, 330, 430, 530 actuator
31, 131, 531 piston member
31b, 131b, 531b rod-shaped portion
31d, 35c, 131d, 135c, 531d, 535c groove
32, 132, 532 tubular member
33, 133, 533 holding member
34, 36, 134, 136, 534, 536 seal member
35, 135, 535 cylinder
35b, 135b, 535b stopper portion
37, 137, 537 base
37a, 137a, 537a approximately cylindrical member
37b, 137b, 537b flange portion
37c, 137c, 537c insertion port
38, 138, 538 gas generator
38a, 138a, 538a cup body
38b, 138b, 538b electrode
40 collar
50, 82, 150, 550 bolt
60, 160, 560 harness
61, 63, 161, 561 connector
62 wiring
70, 170, 270, 370, 470, 570 placement member
73, 173, 573 space
80, 180, 580 mount member
90, 190, 590 trigger device
100, 200, 300, 400, 500, 600 safety device

## Claims

1. A safety device comprising:
a container including a lid;
an ejection object to be accommodated in the container;
an actuator including a sliding member that slides toward one side to push the lid from inside to remove the lid, and a power source that is located on another side of the sliding member and generates a driving force that causes the sliding member to slide toward the one side; and
a placement member that is located in an intersecting direction intersecting a sliding direction of the sliding member with respect to the power source and on which a device that activates the power source is allowed to be placed.

2. The safety device according to claim 1, wherein
at least a part of the actuator is located on the other side of the container, and
the placement member is located in an orthogonal direction orthogonal to the sliding direction with respect to the at least a part of the actuator, and is located on the other side of the container.

3. The safety device according to claim 2, wherein
the at least a part of the actuator includes a part of the sliding member and the power source, and
the placement member is placed in a lower portion of the container.

4. The safety device according to claim 2, further comprising a mount member located on the other side of the actuator and the placement member, to which the actuator is fixed, and that couples the safety device to an airframe.

5. The safety device according to any one of claims 1 to 4, wherein the placement member forms a space capable of accommodating the device.

6. A flight vehicle comprising:
an airframe;
the safety device according to any one of claims 1 to 4 coupled to the airframe; and
the device placed on the placement member.

## Amended claims

### Amended claims under Art. 19.1 PCT

1. (Amended) A safety device comprising:
a container including a lid;
an ejection object to be accommodated in the container;
an actuator including a sliding member that slides toward one side to push the lid from inside to remove the lid, and a power source that is located on another side of the sliding member and generates a driving force that causes the sliding member to slide toward the one side; and
a placement member capable of placing a device that activates the power source at a position facing, with respect to the container including a bottom portion, the bottom portion.

2. The safety device according to claim 1, wherein
at least a part of the actuator is located on the other side of the container, and
the placement member is located in an orthogonal direction orthogonal to the sliding direction with respect to the at least a part of the actuator, and is located on the other side of the container.

3. The safety device according to claim 2, wherein
the at least a part of the actuator includes a part of the sliding member and the power source, and
the placement member is placed in a lower portion of the container.

4. The safety device according to claim 2, further comprising a mount member located on the other side of the actuator and the placement member, to which the actuator is fixed, and that couples the safety device to an airframe.

5. The safety device according to any one of claims 1 to 4, wherein the placement member forms a space capable of accommodating the device.

6. A flight vehicle comprising:
an airframe;
the safety device according to any one of claims 1 to 4 coupled to the airframe; and
the device placed on the placement member.

Statement under Art. 19.1 PCT

Amendments
   In former claim 1, the feature "a placement member that is located in an intersecting direction intersecting a sliding direction of the sliding member with respect to the power source and on which a device that activates the power source is allowed to be placed" has been amended to " a placement member capable of placing a device that activates the power source at a position facing, with respect to the container including a bottom portion, the bottom portion."
Explanation
   The feature in former claim 1, "a placement member that is located in an intersecting direction intersecting a sliding direction of the sliding member with respect to the power source and on which a device that activates the power source is allowed to be placed" has been amended to " a placement member capable of placing a device that activates the power source at a position facing, with respect to the container including a bottom portion, the bottom portion." Accordingly, the amended feature is specified in claim 1.
   The safety device as defined in claim 1, which includes the above feature, is not described in any of the cited documents.
